# EUROPÄISCHE PATENTANMELDUNG

(11) **EP 3 916 877 A1**
(43) Veröffentlichungstag der Anmeldung: **01.12.2021**
(21) Anmeldenummer: 20188237.0
(22) Anmeldetag: 28.07.2020
(51) Int. Cl.: H01M 10/0587, H01M 10/0525, H01M 50/107, H01M 50/186, H01M 50/538

(54) **ENERGIESPEICHERZELLE UND HERSTELLUNGSVERFAHREN**

(30) Priorität: 29.05.2020 EP 20177599; 09.06.2020 EP 20179112; 19.06.2020 EP 20181273
(71) Anmelder: VARTA Microbattery GmbH, 73479 Ellwangen Jagst (DE)
(72) Erfinder: Ensling, David, 73479 Ellwangen (DE); Pytlik, Edward, 73479 Ellwangen (DE)
(74) Vertreter: Patentanwaltskanzlei Cartagena

(57) **Zusammenfassung**

Bekannt ist eine Energiespeicherzelle (100), die einen Verbund (104) aus bandförmigen Elektroden und Separatoren in Form eines zylindrischen Wickels mit zwei endständigen Stirnseiten (104b, 104c) und einem dazwischen liegenden Wickelmantel (104a) aufweist. Die Elektroden weisen jeweils Stromkollektoren (115, 125) auf und sind in dem Verbund versetzt zueinander angeordnet, so dass aus einer der Stirnseiten (104b, 104c) ein Längsrand einer negativen und aus der anderen Stirnseite ein Längsrand einer positiven Elektrode austritt.

Der Verbund (104) ist in einem Gehäuse, das ein metallisches, rohrförmig ausgebildetes Gehäuseteil (101) mit einer endständigen kreisförmigen Öffnung (101c) umfasst, axial ausgerichtet, so dass der Wickelmantel (104a) an der Innenseite (101b) des rohrförmig ausgebildeten Gehäuseteils (101) anliegt. Die Zelle (100) umfasst zur elektrischen Kontaktierung einer der Elektroden ein Kontaktelement (110), das in unmittelbarem Kontakt mit einem der aus einer Stirnseite austretenden Längsränder (115a, 125a) steht und das mit diesem Längsrand bevorzugt durch Verschweißungverbunden ist.

Es wird vorgeschlagen, als Kontaktelement (110) eines mit einem kreisförmigen Rand (110a) einzusetzen, auf den kreisförmigen Rand (110a) des Kontaktelements (110) eine ringförmige Dichtung (103) aus einem elektrisch isolierenden Material aufzuziehen und mit dem Kontaktelement (110) die endständige kreisförmige Öffnung (101c) des rohrförmig ausgebildeten Gehäuseteils (101) zu verschließen.

## Beschreibung

Die nachstehend beschriebene Erfindung betrifft eine Energiespeicherzelle, die einen Elektroden-Separator-Verbund umfasst.

### ANWENDUNGSGEBIET UND STAND DER TECHNIK

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweiligeAktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird derVerbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode/Separator/ positive Elektrode/Separator/ negative Elektrode oder positive Elektrode / Separator/ negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einerweiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

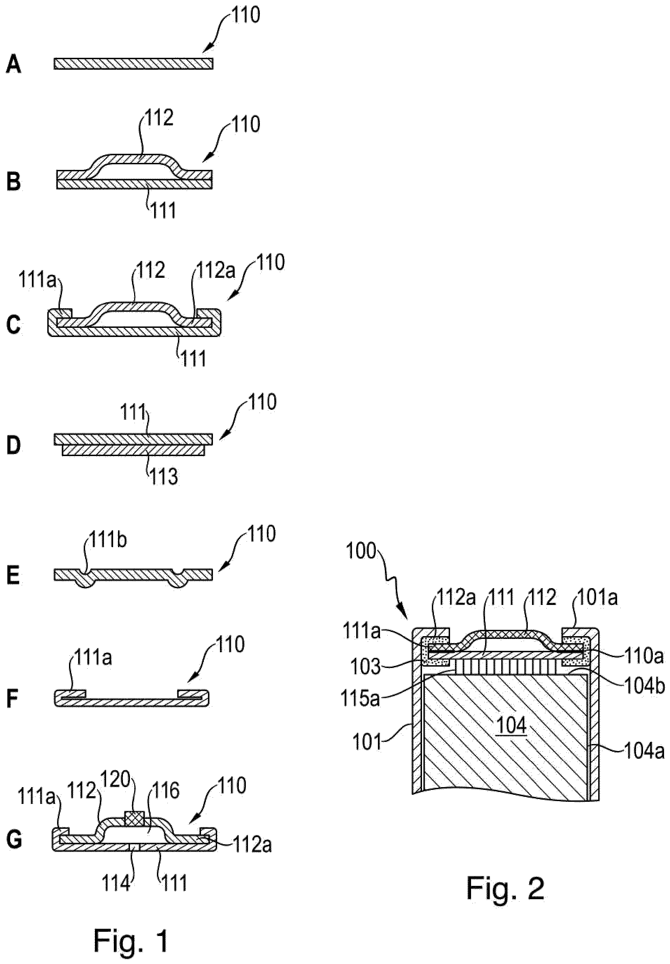

Aus der US 6432574 B1 sind zylindrische Rundzellen bekannt, bei denen gleichfalls als Wickel ausgebildete Elektroden-Separator-Verbünde über stirnseitig aufgeschweißte Kontaktbleche elektrisch kontaktiert werden. In Fig. 2A ist ein typisches Gehäuse zur Aufnahme eines solchen Elektroden-Separator-Verbunds dargestellt. Es umfasst ein becherförmiges Gehäuseteil in dem ein gewickelter Elektroden-Separator-Verbund axial ausgerichtet ist. Verschlossen ist das Gehäuse mittels eines mehrteiligen Deckels, auf dessen Rand eine ringförmige Dichtung aufgezogen ist. Zur Abdichtung des Gehäuses wurde der endständige Rand des Bechers radial nach innen über den Rand des Deckels sowie die darauf aufgezogene Dichtung umgebogen. Zur Unterstützung dieses Prozesses ist die umlaufende tiefe Nut unmittelbar unterhalb des Deckels erforderlich. In diese greift bei der Abdichtung ein Werkzeug ein, damit beim Umbiegen des endständigen Rands von oben und unten ein axialer Druck auf den Deckelrand sowie die Dichtung ausgeübt werden kann. Im Ergebnis wird hierbei die Dichtung zwischen der Nut und der Unterseite des Deckelrands sowie dem umgebogenen Rand des Bechers und der Oberseite des Deckelrands komprimiert, was zu einer effizienten Abdichtung führt. Die benötigte Nut ist allerdings nachteilhaft. Zum einen muss sie nach dem Einschieben des Elektroden-Separator-Verbundes in einem separaten Schritt in das Gehäuse eingebracht werden. Zum anderen bedingt die Nut ein Totvolumen, das mittels eines Stromleiters überwunden werden muss um einen elektrischen Kontakt zum Deckel herzustellen. Im Falle der in Fig. 2A dargestellten Zelle wird hierzu ein überlanges Kontaktblech auf die obere Stirnseite aufgeschweißt, umgebogen und an die Innenseite des Deckels geschweißt.

### AUFGABE UND LÖSUNG

Der vorliegenden Erfindung lag die Aufgabe zugrunde, Energiespeicherzellen bereitzustellen, die sich durch eine gegenüber dem Stand der Technik verbesserte Energiedichte sowie eine homogene Stromverteilung möglichst über die gesamte Fläche und Länge ihrer Elektroden auszeichnen und die gleichzeitig hervorragende Charakteristiken bezüglich ihres Innenwiderstands und ihrer passiven Entwärmungsfähigkeiten besitzen. Weiterhin sollen sich die Zellen auch durch eine verbesserte Herstellbarkeit und Sicherheit auszeichnen.

Diese Aufgabe wird durch die Energiespeicherzelle mit den Merkmalen des Anspruchs 1 sowie das Verfahren mit den Merkmalen des Anspruchs 12 gelöst. Bevorzugte Ausgestaltungen der Zelle und des Verfahrens ergeben sich aus den abhängigen Ansprüchen.

Die erfindungsgemäße Energiespeicherzelle weist stets die unmittelbar folgenden Merkmale a. bis j. auf:
a. Die Zelle umfasst einen Elektroden-Separator-Verbund mit der Sequenz Anode / Separator / Kathode.
b. Der Elektroden-Separator-Verbund liegt in Form eines zylindrischen Wickels mit zwei endständigen Stirnseiten und einem dazwischen liegenden Wickelmantel vor,
c. Die Zelle umfasst ein Gehäuse, das ein metallisches, rohrförmig ausgebildetes Gehäuseteil mit einer endständigen kreisförmigen Öffnung umfasst,
d. In dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt,
e. Die Anode ist bandförmig ausgebildet und umfasst einen bandförmigen Anodenstromkollektor mit einem ersten Längsrand und einem zweiten Längsrand und zwei Endstücken,
f. Der Anodenstromkollektor umfasst einen bandförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist,
g. Die Kathode ist bandförmig ausgebildet und umfasst einen bandförmigen Kathodenstromkollektor mit einem ersten Längsrand und einem zweiten Längsrand und zwei Endstücken,
h. Der Kathodenstromkollektor umfasst einen bandförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist,
i. Die Anode und die Kathode sind innerhalb des Elektroden-Separator-Verbunds derart angeordnet, dass der erste Längsrand des Anodenstromkollektors aus einer der endständigen Stirnseiten und der erste Längsrand des Kathodenstromkollektors aus der anderen der endständigen Stirnseiten austritt.
j. Die Zelle umfasst ein zumindest teilweise metallisch ausgebildetes Kontaktelement, das in unmittelbarem Kontakt mit einem der ersten Längsränder steht und das mit diesem Längsrand bevorzugt durch Verschweißung verbunden ist.

### Wahl sowie bevorzugte Ausführungsformen des elektrochemischen Systems

Grundsätzlich umfasst die Erfindung Energiespeicherzellen unabhängig von ihrer elektrochemischen Ausgestaltung. In besonders bevorzugten Ausführungsformen ist die erfindungsgemäße Energiespeicherzelle jedoch eine Lithium-Ionen-Zelle, insbesondere eine sekundäre Lithium-Ionen-Zelle. Für Anode und Kathode der Energiespeicherzelle können daher im Grunde sämtliche für sekundäre Lithium-Ionen-Zellen bekannten Elektrodenmaterialien verwendet werden.

In der negativen Elektrode einer als Lithium-Ionen-Zelle ausgebildeten erfindungsgemäßen Energiespeicherzelle können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mitAktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches.

Für die positive Elektrode einer als Lithium-Ionen-Zelle ausgebildeten erfindungsgemäßen Energiespeicherzelle kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer als Lithium-Ionen-Zelle ausgebildeten erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

### Wahl sowie bevorzugte Ausführungsformen des Separators

Der Elektroden-Separator-Verbund umfasst bevorzugt mindestens einen bandförmigen Separator, bevorzugt zwei bandförmige Separatoren, der oder die jeweils einen ersten und einen zweiten Längsrand sowie zwei Endstücke aufweisen.

Bevorzugt werden die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen Ausführungsformen kann es sich bei dem Separatoroderden Separatoren des Verbundes auch um eine oder mehrere Schichten aus einem Festelektrolyten handeln.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellungdes Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststoffolie oder ein Klebeband gebildet sein. Es ist auch möglich, dass der Wickelmantel durch eine oder mehrere Separatorwindungen gebildet ist.

### Wahl sowie bevorzugte Ausführungsformen der Stromkollektoren

Die Stromkollektoren der Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

Es ist weiterhin bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

Besonders bevorzugt ragt der Rand oder der Längsrand des Anodenstromkollektors aus der Seite des Stapels oder der Stirnseite des Wickels nicht mehr als 2500 µm, besonders bevorzugt nicht mehr als 1500 µm, heraus. Besonders bevorzugt ragt der Rand oder der Längsrand des Kathodenstromkollektors aus der Seite des Stapels oder der Stirnseite des Wickels nicht mehr als 3500 µm, besonders bevorzugt nicht mehr als 2500 µm, heraus.

### Erfindungsgemäße Lösung

Besonders zeichnet sich die Energiespeicherzelle durch die drei folgenden Merkmale k., l. und m. aus:
k. Das Kontaktelement umfasst einen kreisförmigen Rand.
l. Die Zelle umfasst eine ringförmige Dichtung aus einem elektrisch isolierenden Material, die den kreisförmigen Rand des Kontaktelements umschließt.
m. das Kontaktelement mit der Dichtung verschließt die endständige kreisförmige Öffnung des rohrförmig ausgebildeten Gehäuseteils.

Erfindungsgemäß wird also vorgeschlagen, als Kontaktelement eines mit einem kreisförmigen Rand einzusetzen, auf den kreisförmigen Rand des Kontaktelementseine ringförmige Dichtungauseinem elektrisch isolierenden Material aufzuziehen und mit dem Kontaktelementdie endständige kreisförmige Öffnung des rohrförmig ausgebildeten Gehäuseteils zu verschließen. Das Kontaktelement dient also nicht nur zum elektrischen Kontaktieren einer Elektrode, vielmehr fungiert es gleichzeitig als Gehäuseteil. Damit geht ein großer Vorteil einher, es eine separate elektrische Verbindung zwischen dem Kontaktelement und einem Gehäuseteil ist nämlich nicht mehr erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser hervoragende Entwärmungseigenschaften.

### Bevorzugte Ausführungsformen des Kontaktelements / Elektrische Anbindung des Kontaktelements an den als Wickel ausgebildeten Elektroden-Separator-Verbund

In einer ersten, besonders bevorzugten Erfindungsvariante zeichnet sich die Energiespeicherzelle durch mindestens eines der vier unmittelbar folgenden Merkmale a. bis d. aus:
a. Das Kontaktelement ist oder umfasst eine Metallscheibe, deren Rand dem kreisförmigen Rand des Kontaktelements entspricht oder diesen mitbildet.
b. Das Kontaktelement, insbesondere die Metallscheibe, ist derart in dem rohrförmig ausgebildeten Gehäuseteil angeordnet, dass die ringförmige Dichtung entlang einer umlaufenden Kontaktzone an der Innenseite des rohrförmig ausgebildeten Gehäuseteils anliegt.
c. Die ringförmige Dichtung liegt in der Kontaktzone als Folge eines Pressdrucks, der von dem Rand des Kontaktelements, insbesondere dem Rand der Metallscheibe, und der Innenseite des rohrförmig ausgebildeten Gehäuseteils auf sie ausgeübt wird, komprimiert vor.
d. Der eine der ersten Längsränder liegt unmittelbar an dem Kontaktelement, insbesondere unmittelbar an der Metallscheibe, an und ist bevorzugt mit dem Kontaktelement, insbesondere mit dieser Metallscheibe, durch Verschweißung verbunden.

Besonders bevorzugt sind die unmittelbar vorstehenden Merkmale a., b. und d. in Kombination realisiert. In einer Weiterbildung sind alle vier unmittelbar vorstehenden Merkmale a. bis d. in Kombination miteinander realisiert.

In der einfachsten Ausführungsformen handelt es sich bei der Metallscheibe um ein flaches Blechteil mit kreisförmigem Umfang handeln, das sich nur in einer Ebene erstreckt. In vielen Fällen können aber auch aufwendigere Gestaltungen bevorzugt sein. So kann die Metallscheibe profiliert sein, beispielsweise um ihr Zentrum eine oder mehrere kreisförmige Vertiefungen und oder Erhöhungen, bevorzugt in konzentrischer Anordnung, aufweisen, was beispielsweise in einem wellenförmigen Querschnitt resultieren kann. Es ist auch möglich, dass ihre Innenseite einen oder mehrere Stege aufweist. Weiterhin kann die Scheibe einen Rand aufweisen, der radial nach innen umgebogen ist, so dass sie einen doppellagigen Randbereich mit beispielsweise U-förmigem Querschnitt aufweist.

Das Kontaktelement kann aus mehreren Einzelteilen, darunter die Metallscheibe, bestehen, die nicht zwingend alle aus Metall bestehen müssen. In einer besonders bevorzugten Ausführungsform kann das Kontaktelement beispielsweise einen profilierten metallischen Poldeckel mit kreisförmigem Umfang umfassen, der auf die Metallscheibe aufgeschweißt sein kann und näherungsweise oder exakt den gleichen Durchmesser wie die Metallscheibe aufweist, so dass der Rand der Metallscheibe und der Rand des Poldeckels gemeinsam den Rand des Kontaktelements bilden. In einer weiteren Ausführungsform kann der Rand des Poldeckels durch den erwähnten radial nach innen umgebogenen Rand der Metallscheibe umschlossen werden. In bevorzugten Ausführungsformen kann sogar eine Klemmverbindung zwischen den beiden Einzelteilen bestehen.

Damit die ringförmige Dichtung an der Innenseite entlang der umlaufenden Kontaktzone anliegen kann, ist es bevorzugt, dass das rohrförmige Gehäuseteil zumindest in dem Abschnitt, in dem die Dichtung anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes des Kontaktelements, insbesondere an den Außendurchmesser der Metallscheibe mit der darauf aufgezogenen Dichtung, angepasst.

Die Komprimierung der Dichtung in der Kontaktzone ist ein Merkmal, das im eingangs diskutierten Stand der Technik keine Entsprechung findet. Während bei der in der US 6432574 B1 beschriebenen Zelle die Dichtung ober- und unterhalb eines Deckelrands komprimiert ist, verläuft der komprimierte Dichtungsbereich gemäß der vorliegend beschriebenen Erfindung bevorzugt konzentrisch um den Deckelrand herum.

Bei der Dichtung selbst kann es sich um eine übliche Kunststoffdichtung handeln, die chemisch beständig gegenüber den jeweils verwendeten Elektrolyten sein sollte. Dem Fachmann sind geeignete Dichtungsmaterialien bekannt.

Das Konzept der Verschweißung der Ränder von Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

Insbesondere hinsichtlich derVerschweißung der Metallscheibe mit dem Längsrand des Stromkollektors, die eine grundsätzlich zuverlässigere elektrische Anbindung bietet als beispielsweise nur ein Presskontakt, ist es besonders bevorzugt, dass sich die Metallscheibe durch mindestens eines der unmittelbar folgenden Merkmale a. und b. auszeichnet:
a. Die verwendete Metallscheibe weist bevorzugt eine Dicke im Bereich von 50 µm bis 600 µm, bevorzugt im Bereich von 150 µm bis 350 µm, auf.
b. Die Metallscheibe besteht aus legiertem oder unlegiertem Aluminium, legiertem oder unlegiertem Titan, legiertem oder unlegiertem Nickel oder legiertem oder unlegiertem Kupfer, aber gegebenenfalls auch aus Edelstahl (beispielsweise vom Typ 1.4303 oder 1.4404) oder aus vernickeltem Stahl.

Es ist besonders bevorzugt, dass die unmittelbar vorstehenden Merkmale a. und b. in Kombination realisiert sind.

Wenn es sich bei dem Längsrand, der unmittelbar an der Metallscheibe anliegt, um den Anodenstromkollektor handelt, so bestehen der Anodenstromkollektor und die Metallscheibe, insbesondere die daran geschweißte Metallscheibe, bevorzugt beide aus dem gleichen oder zumindest aus einem chemisch verwandten Material, beispielsweise aus Kupfer und einer Kupferlegierung. Im Falle einer als Lithium-Ionen-Zelle ausgebildeten erfindungsgemäßen Energiespeicherzelle wird dieses bevorzugt aus der Gruppe mit Kupfer, Nickel, Titan, Legierungen diese drei Elemente, vernickeltem Stahl und Edelstahl gewählt. Im Fall einer Lithiumtitanat-Anode können der Anodenstromkollektor und/oder die Metallscheibe auch aus Aluminium bestehen.

Wenn es sich bei dem Längsrand, der unmittelbar an der Metallscheibe anliegt, um den Kathodenstromkollektor handelt, so bestehen der Kathodenstromkollektor und die Metallscheibe, insbesondere die daran geschweißte Metallscheibe, bevorzugt beide aus dem gleichen oder zumindest aus einem chemisch verwandten Material, beispielsweise aus Aluminium und aus einer Aluminiumlegierung. Dieses wird besonders bevorzugt aus der Gruppe mit legiertem oder unlegiertem Aluminium, Titan, Titanlegierungen und Edelstahl (z.B. vom Typ 1.4404) gewählt.

Besonders bevorzugt liegt der eine der ersten Längsränder der Länge nach unmittelbar an der Metallscheibe an. Dadurch bedingt ergibt sich eine linienartige Kontaktzone, die im Falle der spiralförmig aufgewickelten Elektroden einen spiralförmigen Verlauf aufweist. Es ist bevorzugt, dass entlang dieser linien- und bevorzugt spiralförmigen Kontaktzone mittels geeigneter Schweißverbindungen eine möglichst gleichmäßige Anbindung des Längsrands an die Metallscheibe besteht. Besonders bevorzugt kann diese Anbindung wie folgt ausgestaltet sein:
- Der Längsrand des unmittelbar an der Metallscheibe anliegenden Stromkollektors ist über seine gesamte Länge über eine Schweißnaht durchgehend mit der Metallscheibe verbunden.
- Der Längsrand des unmittelbar an der Metallscheibe anliegenden Stromkollektors umfasst einen oder mehrere Abschnitte, die jeweils über ihre gesamte Länge über eine Schweißnaht durchgehend mit der Metallscheibe verbunden sind. Besonders bevorzugt weisen diese Abschnitte eine Mindestlänge von 5 mm, bevorzugt von 10 mm, besonders bevorzugt von 20 mm, auf.
- Der Längsrand des unmittelbar an der Metallscheibe anliegenden Stromkollektors ist über eine Vielzahl von punktförmigen Schweißverbindungen mit der Metallscheibe verbunden (sogenannte Multi-Pin-Verbindung).

Selbstverständlich können unter diesen drei Kontaktierungsvarianten die zweite und die dritte auch miteinander kombiniert werden.

In einer möglichen Weiterbildung der zweiten Kontaktierungsvariante erstrecken sich der oder die mit der Metallscheibe über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes.

In einer zweiten, besonders bevorzugten Erfindungsvariante zeichnet sich die Energiespeicherzelle durch mindestens eines der fünf unmittelbar folgenden Merkmale a. bis e. aus:
a. Das Kontaktelement umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass die ringförmige Dichtung entlang einer umlaufenden Kontaktzone an der Innenseite des rohrförmig ausgebildeten Gehäuseteils anliegt.
c. Die ringförmige Dichtung liegt in der Kontaktzone als Folge eines Pressdrucks, der von dem Rand der Metallscheibe und der Innenseite des rohrförmig ausgebildeten Gehäuseteils auf sie ausgeübt wird, komprimiert vor.
d. Das Kontaktelement umfasst ein metallisches Kontaktblech mit zwei Seiten, von denen eine in Richtung der Metallscheibe weist und bevorzugt durch Verschweißung mit der Metallscheibe verbunden ist.
e. Der eine der ersten Längsränder liegt unmittelbar an der anderen Seite des Kontaktblechs an und ist mit dieser bevorzugt durch Verschweißung verbunden.

Besonders bevorzugt sind die unmittelbar vorstehenden Merkmale a., b., c. und d. in Kombination realisiert. In einer Weiterbildung sind alle fünf unmittelbar vorstehenden Merkmale a. bis e. in Kombination miteinander realisiert.

Bezüglich einiger Merkmale unterscheidet sich die zweite, besonders bevorzugte Erfindungsvariante nicht von der ersten, so etwa im Umfang der Merkmale b. und c., zu denen somit auch nicht mehr separat ausgeführt werden muss. Im Unterschied zur ersten, besonders bevorzugten Erfindungsvariante, umfasst das Kontaktelement neben der Metallscheibe allerdings ein Kontaktblech als weitere Komponente, wobei der eine der ersten Längsränder nicht unmittelbar an der Metallscheibe sondern stattdessen unmittelbar an dem Kontaktblech anliegt. Die Metallscheibe dient zum Verschließen des Gehäuses, während das Kontaktblech den Längsrand des Stromkollektors kontaktiert. Die Anbindung des Längsrands an das Kontaktblech erfolgt hierbei bevorzugt gemäß einer der drei oben beschriebenen Kontaktierungsvarianten.

Das Kontaktblech ist aus stofflicher Sicht bevorzugt ausgebildet wie die Metallscheibe gemäß der ersten, besonders bevorzugten Erfindungsvariante. Es besteht gleichsam bevorzugt aus dem gleichen Material wie der daran anliegende Stromkollektor oder aus einem chemisch verwandten Material. Bevorzugt weist es eine Dicke von 50 µm bis 600 µm, bevorzugt im Bereich von 150 µm bis 350 µm, auf.

In einer einfachen Ausführungsform handelt es sich bei dem Kontaktblech um ein flaches Blechteil, das sich nur in einer Ebene erstreckt, in anderen Ausführungsformen kann es auch ein profiliertes Blechteil sein. Insbesondere ist auch möglich, dass es auf der mit dem Längsrand in Kontakt stehenden Seite einen oder mehrere Stege oder längliche Vertiefungen aufweist.

Das Kontaktblech kann einen kreisförmigen Umfang aufweisen, zwingend erforderlich ist dies aber keineswegs. In einigen Fällen kann das Kontaktblech beispielsweise ein Metallstreifen sein oder mehrere streifenförmige Segmente aufweisen, die beispielsweise in einer sternförmigen Anordnung vorliegen.

In einigen Ausführungsformen kann ein Kontaktblech verwendet werden, das mindestens einen Schlitz und/oder mindestens eine Perforierung aufweist. Diese können dazu dienen, einer Verformung des Kontaktblechs bei der Herstellung einer Schweißverbindung zu dem ersten Längsrand entgegenzuwirken.

Die zur Metallscheibe weisende Seite des Kontaktblechs ist bevorzugt derart ausgebildet, dass bei einem unmittelbaren Kontakt des Kontaktblechs mit der Metallscheibe eine zweidimensionale Kontaktfläche vorliegt, das Kontaktblech und die Metallscheibe also zumindest bereichsweise flach aufeinander liegen. Bevorzugt bestehen dieser unmittelbare Kontakt sowie die zweidimensionale Kontaktfäche.

Die Metallscheibe ist bevorzugt komplementär hierzu ausgebildet. Sie weist bevorzugt ebenfalls eine Dicke im Bereich von 50 µm bis 600 µm auf. Wenn sie mit dem Kontaktblech kombiniert ist, kann sie aus Edelstahl bestehen, beispielsweise vom Typ 1.4303 oder 1.4404.

Bevorzugt stehen das Kontaktblech und die Metallscheibe in starrem, weiter bevorzugt in starrem, unmittelbarem Kontakt miteinander. In diesem Fall sind sie besonders bevorzugt durch Verschweißung oder Verlötung aneinander fixiert.

In besonders bevorzugten Ausführungsformen ist das Kontaktblech ausgebildet wie die in der WO 2017/215900 A1 beschriebenen Kontaktplatten.

### Verschluss der endständigen kreisförmigen Öffnung - Bevorzugte Ausgestaltungen

Besonders bevorzugt zeichnet sich die Energiespeicherzelle, insbesondere in den beschriebenen Ausführungsformen der ersten und der zweiten besonders bevorzugten Erfindungsvariante, durch mindestens eines der zwei unmittelbar folgenden zusätzlichen Merkmale a. und b. aus:
a. Das rohrförmig ausgebildete Gehäuseteil umfasst in axialer Richtung einen Zentralabschnitt, in dem der Wickelmantel an seiner Innenseite anliegt, sowie einen Kontaktabschnitt, in dem die ringförmige Dichtung an seiner Innenseite anliegt, wobei
   - Das rohrförmig ausgebildete Gehäuseteil in und zwischen den beiden Abschnitten einen konstanten Innendurchmesser aufweist und/oder
   - der Zentralabschnitt von dem Kontaktabschnitt durch eine Vertiefung, welche die Außenseite des rohrförmig ausgebildeten Gehäuseteils kreisförmig umläuft, getrennt wird.
b. Im Bereich der umlaufenden Vertiefung ist der Außendurchmesser des rohrförmig ausgebildeten Gehäuseteils um maximal das 2- bis 6-fache der Wandstärke des Gehäuses in diesem Bereich reduziert.

Entsprechend den obigen Ausführungen zur bevorzugten Ausgestaltung des rohrförmig ausgebildete Gehäuseteils im Bereich der Kontaktzone ist der Kontaktabschnitt bevorzugt zylindrisch oder präziser hohlzylindrisch ausgebildet. Gleiches gilt hinsichtlich der Gestaltung des Zentralabschnitts.

Bei der erwähnten Vertiefung handelt es sich bevorzugt um eine umlaufende Sicke, die herstellungsbedingt auftreten kann, jedoch anders als die bei klassischen Zellen ins Gehäuse eingebrachte Nut (siehe obige Ausführungen zur WO 2017/215900 A1) keinesfalls Voraussetzung zum Verschließen des Gehäuses ist. Sie ist daher bevorzugt auch sehr viel weniger tief als die beschriebene Nut ausgebildet. Im Idealfall ist die Sicke derart schwach ausgebildet, dass ihre Anwesenheit keinen Einfluss auf den Innendurchmesser des rohrförmig ausgebildeten Gehäuseteils hat, so dass dieser vom Zentralabschnitt bis in den Kontaktabschnitt hinein konstant ist. Dies hat den signifikanten Vorteil, dass das durch die Nut bedingte Totvolumen keine Entsprechung hat und der Zentralabschnitt näher an den Kontaktabschnitt heranrücken kann. Mit anderen Worten, es ist möglich, höhere Wickel aus Elektroden und Separatoren zu verbauen und so die Energiedichte der Energiespeicherzellen zu steigern. Insbesondere in Kombination mit den Merkmalen der oben beschriebenen ersten besonders bevorzugten Erfindungsvariante ergibt sich weiterhin der Vorteil, dass ein separater Stromleiter zum Überbrücken der Distanz zwischen dem Wickel und einem Gehäusedeckel verzichtbar ist.

In einigen Ausführungsformen der Erfindung ist es weiterhin bevorzugt, dass sich die Energiespeicherzelle durch mindestens eines der zwei unmittelbar folgenden zusätzlichen Merkmale a. und b. auszeichnet:
a. Das rohrförmig ausgebildete Gehäuseteil umfasst einen kreisförmigen Rand, der radial nach innen über den von der Dichtung umschlossenen Rand des Kontaktelements umgebogen ist und der das Kontaktelement in der kreisförmigen Öffnung des rohrförmig ausgebildeten Gehäuseteils fixiert.
b. Der Kontaktabschnitt erstreckt sich in axialer Richtungvon derVertiefung bis zu dem radial nach innen umgebogenen Rand.

Während Merkmal a. für alle oben beschriebenen Ausführungsformen eine bevorzugte Weiterbildung darstellt, ist Merkmal b. nur für die Fälle relevant, in denen die beschriebene Sicke auftritt.

### Gehäusevariante mit Gehäusebecher

In einer besonders bevorzugten Ausführungsform der Erfindung zeichnet sich die Energiespeicherzelle durch mindestens eines der unmittelbar folgenden zusätzlichen Merkmale a. und b. aus:
a. Das rohrförmig ausgebildete Gehäuseteil ist Bestandteil eines Gehäusebechers, der einen kreisförmigen Boden umfasst.
b. Der andere der ersten Längsränder liegt unmittelbar an dem Boden an und ist mit dem Boden bevorzugt durch Verschweißung verbunden.

Besonders bevorzugt sind die unmittelbar vorstehenden Merkmale a. und b. in Kombination realisiert.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung der Längsränder eines Stromkollektors an den Boden eines Gehäusebechers, wie es hier vorgeschlagen wird. Auch diese Maßnahme ermöglicht den Verzicht eines separaten elektrischen Leiters, nunmehr bodenseitig, sowie die Verwendung eines axial verlängerten gewickelten Elektroden-Separator-Verbunds und trägt somit dazu bei, die Energiedichte der erfindungsgemäßen Zelle zu erhöhen und ihre Entwärmungseigenschaften zu verbessern.

Gemäß der vorliegenden Erfindung ist es also möglich und bevorzugt, die aus gegenüberliegenden Stirnseiten eines als Wickel ausgebildeten Elektroden-Separator-Verbunds austretenden Stromkollektorränder von positiver und negativer Elektrode jeweils unmittelbar an ein Gehäuseteil, nämlich den Boden des Bechers und das oben beschriebene, als Verschlusselement fungierende Kontaktelement, anzukoppeln. Die Nutzung des verfügbaren Innenvolumens des Zellgehäuses für aktive Komponenten nähert sich so ihrem theoretischen Optimum.

Die Ankopplung des anderen der ersten Längsränder an den Boden folgt grundsätzlich den gleichen konstruktiven Prinzipien wie im Fall des Kontaktelements. Auch hier liegt der Längsrand bevorzugt der Länge nach unmittelbar am Boden an so dass sich eine linienartige Kontaktzone ergibt, die im Falle der spiralförmig aufgewickelten Elektroden einen spiralförmigen Verlauf aufweist. Weiterhin ist auch hier bevorzugt, dass entlang dieser linien- und bevorzugt spiralförmigen Kontaktzone mittels geeigneter Schweißverbindungen eine möglichst gleichmäßige Anbindung des Längsrands an die Metallscheibe besteht. Diese Anbindung ist bevorzugt gemäß einer der drei oben beschriebenen Kontaktierungsvarianten oder einer Kombination dieser Kontaktierungsvarianten ausgestaltet, also beispielsweise als Multi-Pin-Verbindung.

Der Gehäusebecher weist, insbesondere im Bereich seines Bodens, bevorzugt eine ähnliche Dicke auf wie die oben beschriebene Metallscheibe, also insbesondere eine Dicke im Bereich von 50 µm bis 600 µm, bevorzugt im Bereich von 150 µm bis 350 µm.

Insbesondere wenn die erfindungsgemäße Zelle als Lithium-Ionen-Zelle ausgestaltet ist, hängt die Wahl des Materials, aus dem der Gehäusebecher gefertigt wird, davon ab, ob der Anoden- oder der Kathodenstromkollektor an den Boden angebunden ist. Geeignet sind grundsätzlich die gleichen Materialien, aus denen die Stromkollektoren selbst gefertigt werden. Auch die oben für die Metallscheibe genannten Materialien kommen in Frage.

Grundsätzlich ist es auch möglich, dass - wie im Falle des Kontaktelements, zwischen dem Längsrand des anderen der ersten Längsränder und dem Boden des Bechers lediglich eine mittelbare Verbindung über ein Kontaktblech besteht. In diesem Fall besteht zwischen dem Längsrand und dem Kontaktblech bevorzugt eine Schweißverbindung gemäß einer der drei oben beschriebenen Kontaktierungsvarianten während das Kontaktblech mit dem Boden bevorzugt durch unmittelbare Verschweißung verbunden ist. Das Kontaktblech ist bevorzugt ausgestaltet wie sein Pendant im Falle des beschriebenen Kontaktelements.

### Gehäusevariante mit zwei Deckeln

In einer weiteren besonders bevorzugten Ausführungsform der Erfindung zeichnet sich die Energiespeicherzelle durch mindestens eines der drei unmittelbar folgenden zusätzlichen Merkmale a. bis c. aus:
a. Das rohrförmig ausgebildete Gehäuseteil weist eine weitere endständige kreisförmige Öffnung auf.
b. Die Zelle umfasst ein Verschlusselement mit einem kreisförmigen Rand, das diese weitere endständige Öffnung verschließt.
c. Das Verschlusselement für die weitere endständige Öffnung ist oder umfasst eine Metallscheibe, deren Rand dem kreisförmigen Rand des metallischen Verschlusselements entspricht oder diesen mitbildet.

Besonders bevorzugt sind die unmittelbar vorstehenden Merkmale a. bis c. in Kombination realisiert.

In dieser Ausführungsform ersetzt das rohrförmig ausgebildete Gehäuseteil gemeinsam mit einem Verschlusselement einen Gehäusebecher. Das Gehäuse setzt sich also aus drei Gehäuseteilen zusammen, von denen eines rohrförmig ausgebildet ist und die anderen beiden (das Kontaktelement und das Verschlusselement) die endständigen Öffnungen des rohrförmigen Teils als Deckel verschließen. Produktionstechnisch bietet dies Vorteile, da für die Herstellung rohrförmiger Gehäuseteile, anders als bei Gehäusebechern, keine Tiefziehwerkzeuge benötigt werden. Daneben resultieren bei einer unmittelbaren Anbindung des anderen der ersten Längsränder an das Verschlusselement grundsätzlich die gleichen Vorteile wie bei der oben beschriebenen Anbindung an den Boden eines Gehäusebechers.

Das rohrförmig ausgebildete Gehäuseteil ist in dieser Ausführungsform bevorzugt zylindrisch bzw. hohlzylindrisch ausgebildet. Bei dem Verschlusselement handelt es sich, in Analogie zu dem oben beschriebenen Kontaktelement, in der einfachsten Ausführungsform um eine Metallscheibe mit kreisförmigem Umfang, die sich nur in einer Ebene erstreckt, oder alternativ um eine profilierte Metallscheibe, die beispielsweise um ihr Zentrum eine oder mehrere kreisförmige Vertiefungen und/oder Erhöhungen, bevorzugt in konzentrischer Anordnung, aufweist, was beispielsweise in einem wellenförmigen Querschnitt resultieren kann. Gleichfalls bevorzugt kann die Innenseite des Verschlusselements, insbesondere der Metallscheibe, einen oder mehrere Stege aufweist. Weiterhin kann das Verschlusselement, insbesondere die Metallscheibe, auch einen Rand aufweisen, der radial nach innen umgebogen ist, so dass es oder sie einen doppellagigen Randbereich mit beispielsweise U-förmigem Querschnitt aufweist.

Bei der Wahl des Materials und der bevorzugten Dicke des Verschlusselements, insbesondere der Metallscheibe, kann gleichfalls auf die obigen Ausführungen zur Metallscheibe des Verschlusselements verwiesen werden. Die dort genannten bevorzugten Merkmale gelten auch für das Verschlusselement.

In einer Weiterbildung dieser besonders bevorzugten Ausführungsform zeichnet sich die Energiespeicherzelle durch mindestens eines der unmittelbar folgenden Merkmale a. bis c. aus:
a. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
b. Der Rand der Metallscheibe ist mit dem rohrförmig ausgebildeten Gehäuseteil über eine umlaufende Schweißnaht verbunden.
c. Das rohrförmig ausgebildete Gehäuseteil umfasst einen kreisförmigen Rand, der radial nach innen über den Rand des Verschlusselements, insbesondere den Rand der Metallscheibe, umgebogen ist.

Besonders bevorzugt sind die unmittelbar vorstehenden Merkmale a. und b., gegebenenfalls auch die unmittelbar vorstehenden Merkmale a. bis c., in Kombination realisiert.

Gemäß dieser Weiterbildung ist es also bevorzugt, das Verschlusselement durch Verschweißung in derweiteren endständigen Öffnungzu fixieren. Ein separates Dichtelement wird bei einerumlaufenden Schweißnaht nicht benötigt.

Das radiale Umbiegen des Randes des Verschlusselements ist eine fakultative Maßnahme, die zum Fixieren des Verschlusselements nicht benötigt wird, ungeachtet dessen aber zweckmäßig sein kann.

In einer Weiterbildung zeichnet sich die Energiespeicherzelle gemäß der weiteren besonders bevorzugten Ausführungsform der Erfindung durch eines der unmittelbar folgenden Merkmale a. bis c. aus:
a. Der andere der ersten Längsränder liegt unmittelbar an der Metallscheibe an und ist mit der Metallscheibe bevorzugt durch Verschweißung verbunden.
b. Der andere der ersten Längsränder ist an ein Kontaktblech geschweißt, das unmittelbar an der Metallscheibe anliegt.

Grundsätzlich ist es auch hier möglich, dass - wie im Falle des Kontaktelements, zwischen dem Längsrand des anderen der ersten Längsränder und der Metallscheibe bzw. dem Verschlusselement lediglich eine mittelbare Verbindungüberein Kontaktblech besteht. In diesem Fall besteht zwischen dem Kontaktblech und dem Verschlusselement, insbesondere der Metallscheibe, bevorzugt eine Verbindung durch unmittelbare Verschweißung. Das Kontaktblech ist bevorzugt ausgestaltet wie sein Pendant im Falle des beschriebenen Kontaktelements. Insbesondere gilt, dass eine zur Metallscheibe weisende Seite des Kontaktblechs in unmittelbarem Kontakt mit der Metallscheibe steht so dass eine zweidimensionale Kontaktfläche vorliegt, das Kontaktblech und die Metallscheibe also zumindest bereichsweise flach aufeinander liegen.

Für die Ankopplung des anderen der ersten Längsränder an die Metallscheibe des Verschlusselements oder an das Kontaktblech gelten die gleichen bevorzugten Ausführungsformen, die auch für die oben beschriebene Ankopplungen der Längsränder an den Becherboden und an das Kontaktelement gelten. Zur Vermeidung von Wiederholungen wird auf die entsprechenden Ausführungen hierzu (linienartige Kontaktzone mit bevorzugt spiralförmigem Verlauf, möglichst gleichmäßige Anbindung des Längsrands an die Metallscheibe entlang dieser linienartigen Kontaktzone mittels geeigneter Schweißverbindungen) verwiesen.

Die Metallscheibe des Verschlusselements weist bevorzugt eine ähnliche Dicke auf wie die Metallscheibe des Kontaktelements, also insbesondere eine Dicke im Bereich von 50 µm bis 600 µm, bevorzugt im Bereich von 150 µm bis 350 µm.

Insbesondere wenn die erfindungsgemäße Zelle als Lithium-Ionen-Zelle ausgestaltet ist, hängt die Wahl des Materials, aus dem die Metallscheibe des Verschlusselements gefertigt wird, davon ab, ob der Anoden- oder der Kathodenstromkollektor an das Verschlusselement angebunden ist. Geeignet sind grundsätzlich die gleichen Materialien, aus denen die Stromkollektoren selbst gefertigt werden. Auch die oben für die Metallscheibe des Kontaktelements genannten Materialien kommen in Frage.

### Gehäusevariante mit zwei elektrisch isolierten Deckeln

In einer weiteren besonders bevorzugten Ausführungsform der Erfindung zeichnet sich die Energiespeicherzelle durch mindestens eines der vier unmittelbar folgenden zusätzlichen Merkmale a. bis d. aus:
a. Die Zelle umfasst eine ringförmige Dichtung aus einem elektrisch isolierenden Material, die den kreisförmigen Rand des Verschlusselements, insbesondere den Rand der Metallscheibe, umschließt.
b. Die Metallscheibe ist derart in dem rohrförmig ausgebildeten Gehäuseteil angeordnet, dass die ringförmige Dichtung entlang einer umlaufenden Kontaktzone an der Innenseite des rohrförmig ausgebildeten Gehäuseteils anliegt.
c. Die ringförmige Dichtung liegt in der Kontaktzone als Folge eines Pressdrucks, der von dem Rand der Metallscheibe und der Innenseite des rohrförmig ausgebildeten Gehäuseteils auf sie ausgeübt wird, komprimiert vor.
d. Das rohrförmig ausgebildete Gehäuseteil umfasst einen kreisförmigen Rand, der radial nach innen über den von der Dichtung umschlossenen Rand des Verschlusselements umgebogen ist und der das Verschlusselement in der weiteren endständigen Öffnung des rohrförmigen Gehäusesegments fixiert.

Besonders bevorzugt sind die drei unmittelbar vorstehenden Merkmale a. bis c., gegebenenfalls auch die vier unmittelbar vorstehenden Merkmale a. bis d., in Kombination realisiert.

In einer Weiterbildung zeichnet sich die Energiespeicherzelle bevorzugt durch eines der unmittelbar folgenden Merkmale a. und b. aus:
a. Der andere der ersten Längsränder liegt unmittelbar an der Metallscheibe an und ist mit der Metallscheibe durch Verschweißung verbunden.
b. Der andere der ersten Längsränder ist an ein Kontaktblech geschweißt, das unmittelbar an der Metallscheibe anliegt.

Auch in diesen Ausführungsformen ersetzt das rohrförmig ausgebildete Gehäuseteil gemeinsam mit einem Verschlusselement einen Gehäusebecher. Das Gehäuse besteht also auch hier aus drei Gehäuseteilen, von denen eines rohrförmig ausgebildet ist und die anderen beiden (das Kontaktelement und das Verschlusselement) die endständigen Öffnungen des rohrförmigen Teils als Deckel verschließen. Allerdings sind hier sowohl das Kontaktelement als auch das Verschlusselement elektrisch von dem rohrförmig ausgebildeten Gehäuseteil isoliert. Das Kontaktelement und das Verschlusselement bilden die Pole der Zelle.

Bezüglich der Ausgestaltung des Verschlusselements kann auf die obigen Ausführungen zum Kontaktelement verwiesen werden. Alle bevorzugten Ausführungsformen, die für das Kontaktelement gelten, sind auch auf das Verschlusselement anwendbar. In besonders bevorzugten Ausführungsformen können das Verschlusselement und das Kontaktelement spiegelsymmetrisch zueinander ausgeführt werden, gegebenenfalls abgesehen von dem jeweils gewählten metallischen Material, das in der Regel in Abhängigkeit von der jeweiligen Polarität gewählt wird.

Für die Ankopplung des anderen der ersten Längsränder an die Metallscheibe des Verschlusselements oder an das Kontaktblech gelten die gleichen bevorzugten Ausführungsformen, die auch für die oben beschriebene Ankopplungen der Längsränder an den Becherboden und an das Kontaktelement gelten. Zur Vermeidung von Wiederholungen wird auch hier auf die entsprechenden Ausführungen hierzu (linienartige Kontaktzone mit bevorzugt spiralförmigem Verlauf, möglichst gleichmäßige Anbindung des Längsrands an die Metallscheibe entlang dieser linienartigen Kontaktzone mittels geeigneter Schweißverbindungen) verwiesen.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch Verschweißung, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Energiespeicherzelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieserVerbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die bandförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die bandförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt bandförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der Energiespeicherzelle

Bei der erfindungsgemäßen Energiespeicherzelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Lithium-Ionen-Zelle ausgebildeten erfindungsgemäßen Knopfzelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Energiespeicherzelle jedoch eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Energiespeicherzellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als Lithium-Ionen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 1,5 m
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 2,5 m
auf.

### Hersteltungsverfahren

Das erfindungsgemäße Verfahren zur Herstellung einer Energiespeicherzelle zeichnet sich stets durch die folgenden Schritte aus:
a. Bereitstellung eines Elektroden-Separator-Verbunds mit der Sequenz Anode / Separator / Kathode, der in Form eines zylindrischen Wickels mit zwei endständigen Stirnseiten und einem dazwischen liegenden Wickelmantel vorliegt, wobei die Elektroden jeweils einen mit einem Elektrodenmaterial beschichteten Stromkollektor mit einem ersten Längsrand und einem zweiten Längsrand und zwei Endstücken aufweisen und einer der Längsränder einer der Elektroden aus einer der endständigen Stirnseiten austritt:
   In diesem Schritt wird ein Elektroden-Separator-Verbund bereitgestellt, wie er oben beschrieben wurde. Auf die entsprechenden Ausführungen wird verwiesen.
b. Bereitstellung eines rohrförmig ausgebildeten Gehäuseteils, das eine endständige kreisförmige Öffnung aufweist:
   Bezüglich möglicher Ausgestaltungen dieses Teils wird gleichfalls auf die obigen Ausführungen zur erfindungsgemäßen Zelle verweisen.
c. Bereitstellung eines zumindest teilweise metallisch ausgebildeten Kontaktelements, das einen kreisförmigen Rand aufweist:
   Auch an dieser Stelle erfolgt der Verweis auf die Beschreibung des Kontaktelements im Zusammenhang mit der erfindungsgemäßen Zelle.
d. Aufbringen einer ringförmigen Dichtung auf den kreisförmigen Rand des Kontaktelements.
e. Verschweißen des aus der Stirnseite austretenden Längsrands mit dem Kontaktelement oder einer metallischen Komponente des Kontaktelements:
   Bei der metallischen Komponente des Kontaktelements handelt es sich insbesondere um das oben beschriebene Kontaktblech. Das Verschweißen kann beispielsweise mittels eines Lasers erfolgen. Die Anbindung des Längsrands an das Kontaktblech erfolgt hierbei bevorzugt gemäß einer der drei oben beschriebenen Kontaktierungsvarianten.
f. Einschieben des Elektroden-Separator-Verbunds durch die kreisförmige Öffnung in das rohrförmig ausgebildete Gehäuseteil, so dass der Wickelmantel an der Innenseite des rohrförmig ausgebildeten Gehäuseteils anliegt und die auf den Rand des Kontaktelements aufgebrachte ringförmige Dichtung entlang einer umlaufenden Kontaktzone an der Innenseite des rohrförmig ausgebildeten Gehäuseteils anliegt.
g. Ausüben eines radial gerichteten Drucks auf das rohrförmig ausgebildete Gehäuseteil, so dass dessen Innenseite gegen den Rand des Kontaktelements gepresst und die dazwischen angeordnete ringförmige Dichtung einem Pressdruck ausgesetzt und komprimiert wird.

Die aufgeführten Schritte müssen nicht zwingend in der angegebenen Reihenfolge getätigt werden. So ist es beispielsweise möglich, die Schritte d., e. und f. in der Reihenfolge zu vertauschen.

In einer bevorzugten Ausführungsform zeichnet sich das Verfahren zusätzlich durch mindestens einen der unmittelbar folgenden Schritte und/oder eines der unmittelbar folgenden Merkmale aus:
a. Das rohrförmig ausgebildete Gehäuseteil umfasst in axialer Richtung einen im Wesentlichen zylindrischen Zentralabschnitt, einen endständigen Abschnitt, der sich bis zu einem kreisförmigen Öffnungsrand erstreckt, und gegebenenfalls einen dazwischen liegenden Übergangsbereich.
b. Der Übergangsbereich zwischen dem zylindrischen Zentralabschnitt und dem endständigen Abschnitt besteht in einer als Stufe ausgebildeten Erweiterung des Innendurchmessers des rohrförmig ausgebildeten Gehäuseteils.
c. Der endständige Abschnitt weist ausgehend von der als Stufe ausgebildeten Erweiterung in Richtung des kreisförmigen Öffnungsrands einen ansteigenden Innendurchmesser auf.
d. Das Kontaktelement mit der auf seinen Rand aufgebrachten ringförmigen Dichtung weist einen Außendurchmesser auf, der kleiner ist als ein Innendurchmesser des rohrförmigen Gehäuseteils in dem endständigen Abschnitt und größer, als der Innendurchmesser des rohrförmigen Gehäuseteils in dem zylindrischen Zentralabschnitt.
e. Der Elektroden-Separator-Verbund wird so weit in das rohrförmig ausgebildete Gehäuseteil eingeschoben, dass das Kontaktelement auf der als Stufe ausgebildeten Erweiterung aufsitzt.

Besonders bevorzugt sind die unmittelbar vorstehenden Schritte und/oder Merkmale a. und b. sowie d. und e. in einer Ausführungsform miteinander kombiniert, oft auch die unmittelbar vorstehenden Schritte und/oder Merkmale a. bis e..

Weiterhin zeichnet sich das erfindungsgemäße Verfahren in bevorzugten Ausführungsformen durch mindestens eines der unmittelbar folgenden Merkmale a. und b. aus:
a. Nach dem Einschieben des Elektroden-Separator-Verbunds wird der Außendurchmesser des endständigen Abschnitts an den Außendurchmesser des zylindrischen Zentralabschnitts angeglichen, wobei der Übergangsbereich radial eingedrückt und die Dichtung komprimiert wird.
b. Nach der Angleichung des Außendurchmessers des endständigen Abschnitts wird der Öffnungsrand des endständigen Abschnitts radial nach innen über den von der Dichtung umschlossenen Rand des Kontaktelements umgebogen.

Besonders bevorzugt sind die unmittelbar vorstehenden Schritte a. und b. in Kombination realisiert.

Bei dem Übergangsbereich, der in dieser Ausführungsform radial eingedrückt wird, handelt es sich um die als Stufe ausgebildete Erweiterung. Aus diesem Vorgang kann die oben beschriebene Sicke resultieren.

Weiterhin zeichnet sich das erfindungsgemäße Verfahren in bevorzugten Ausführungsformen durch mindestens eines der drei unmittelbar folgenden Merkmale a. bis c. aus:
a. Der Elektroden-Separator-Verbund wird mit einem Elektrolyten getränkt, wobei der Elektrolyt durch eine dafür vorgesehene Durchbrechung in dem Kontaktelement oder einem anderen Gehäuseteil eingefüllt wird.
b. Nach dem Einfüllen des Elektrolyten getränkt wird die Durchbrechung verschlossen, beispielsweise durch Verklebung oder Verschweißung.
c. Der Verschluss erfolgt unter Verwendung einer Überdrucksicherung.

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### KURZBESCHREIBUNG DER ZEICHNUNGEN

In den Zeichnungen zeigen schematisch
- Fig. 1 verschiedene Ausführungsformen eines Kontaktelements einer erfindungsgemäßen Energiespeicherzelle (Querschnittsdarstellungen),
- Fig. 2 eine Teildarstellung einer erfindungsgemäßen Energiespeicherzelle (Querschnittsdarstellung),
- Fig. 3 eine bevorzugte Ausführungsform einer erfindungsgemäßen Energiespeicherzelle (Querschnittsdarstellung),
- Fig. 4 eine weitere bevorzugte Ausführungsform einer erfindungsgemäßen Energiespeicherzelle (Querschnittsdarstellung),
- Fig. 5 eine weitere bevorzugte Ausführungsform einer erfindungsgemäßen Energiespeicherzelle (Querschnittsdarstellung),
- Fig. 6 eine weitere bevorzugte Ausführungsform einer erfindungsgemäßen Energiespeicherzelle (Querschnittsdarstellung),
- Fig. 7 eine weitere bevorzugte Ausführungsform einer erfindungsgemäßen Energiespeicherzelle (Querschnittsdarstellung),
- Fig. 8 eine Veranschaulichung einer Ausführungsform des Gehäuseverschlusses gemäß dem erfindungsgemäßen Verfahren (Querschnittsdarstellungen),
- Fig. 9 eine Illustration eines erfindungsgemäßen Verfahrens zur Herstellung einer erfindungsgemäßen Zelle (Querschnittsdarstellungen),
- Fig. 10 eine Illustration von Schweißverbindungen zur Anbindung eines Längsrandes eines Stromkollektors an ein Kontaktblech eines Kontaktelements (Draufsicht von oben).

In Fig. 1 finden sich Querschnittsdarstellungen verschiedener Ausführungsformen von Kontaktelementen 110, sie sich zum Verschließen erfindungsgemäßer Energiespeicherzellen 100 eignen. Im Einzelnen:
A Hier ist die einfachste Ausführungsform eines Kontaktelements 110 gemäß der Erfindung dargestellt, nämlich eine flache Metallscheibe mit kreisrundem kreisförmigem Umfang, welche sich nur in einer Ebene erstreckt. Die Metallscheibe kann beispielsweise aus Aluminium bestehen.
B Das hier dargestellte Kontaktelement 110 umfasst die Metallscheibe 111 und den Poldeckel 112. Die Metallscheibe 111 und der Poldeckel 112 weisen jeweils einen kreisförmigen Umfang und einen identischen Durchmesser auf. Während sich die Metallscheibe 111 nur in einer Ebene erstreckt, weist der Poldeckel 112 eine zentrale Wölbung auf. Die beiden Teile 111 und 112 des Kontaktelements 110 sind bevorzugt durch eine Verschweißung (nicht dargestellt) miteinander verbunden.
C Das hier dargestellte Kontaktelement 110 umfasst die Metallscheibe 111 und den Poldeckel 112. Der Poldeckel 112 ist analog zu dem Poldeckel in B ausgebildet. Allerdings ist der Rand 111a der Metallscheibe 111 hier radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Ungeachtet dessen ist es bevorzugt, wenn die Metallscheibe 111 und der Poldeckel 112 zusätzlich miteinander verschweißt sind.
D Das hier dargestellte Kontaktelement 110 umfasst die Metallscheibe 111 und das Kontaktblech 113. Das Kontaktblech 113 liegt flach an der Metallscheibe 111 an und ist mit dieser vorzugsweise verschweißt. Die Metallscheibe 111 kann beispielsweise aus Edelstahl bestehen, das Kontaktblech 113 beispielsweise aus einer Aluminiumlegierung.
E Das hier dargestellte Kontaktelement 110 umfasst lediglich eine Metallscheibe. Diese weist im Unterschied zu der in A dargestellten Metallscheibe auf ihrer Oberseite eine kreisförmige Vertiefung 111b sowie auf ihrer Unterseite eine dazu korrespondierende Erhöhung auf, ist also profiliert.
F Das hier dargestellte Kontaktelement 110 umfasst lediglich eine Metallscheibe. Diese weist im Unterschied zu der in A dargestellten Metallscheibe einen radial nach innen umgeschlagenen Rand 111a und in der Folge einen doppellagigen Randbereich auf.
G Das hier dargestellte Kontaktelement 110 umfasst die Metallscheibe 111 und den Poldeckel 112, der eine zentrale Wölbung aufweist. Der Rand 111a der Metallscheibe 111 ist radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Bevorzugt sind die Ränder 111a und 112a der Metallscheibe 111 und des Poldeckels 112 zusätzlich durch eine umlaufende Verschweißung (nicht dargestellt) miteinander verbunden. Im Zentrum der Metallscheibe 111 findet sich das Loch 114, durch das ein Hohlraum 116 zugänglich ist, der von der Metallscheibe 111 und dem Poldeckel 112 eingeschlossen ist. In den Poldeckel 112 ist eine Überdrucksicherung 120 integriert, die bei einem Überdruck im Hohlraum 116 auslösen kann. Bei der Überdrucksicherung 120 kann es sich im einfachsten Fall um eine Sollrissstelle handeln.

Die in **Fig. 2** dargestellte Energiespeicherzelle 100 zeichnet sich durch das in Fig. 1B dargestellte Kontaktelement 110 aus, dessen Rand 110a von den Rändern 111a und 112a der Metallscheibe 111 und des Poldeckels 112 gebildet wird und von der ringförmigen Dichtung 103, die aus einem elektrisch isolierenden Kunststoff besteht, umschlossen wird. Das Kontaktelement 110 bildet gemeinsam mit dem hohlzylindrisch ausgebildeten Gehäuseteil 101 das Gehäuse der Energiespeicherzelle 100 und verschließt eine seiner endständigen Öffnungen. Der Rand 101a des Gehäuseteils 101 ist radial nach innen über den von der Dichtung 103 umschlossenen Rand 110a des Kontaktelements 110 umgebogen und fixiert das Kontaktelement 110 in der kreisförmigen Öffnung des rohrförmig ausgebildeten Gehäuseteils 101. In dem Gehäuse ist der spiralförmig gewickelte Elektroden-Separator-Verbund 104 axial ausgerichtet, so dass sein Wickelmantel 104a an der Innenseite des rohrförmig ausgebildeten Gehäuseteils 101 anliegt. Aus der obenliegenden Stirnseite 104b des als Wickel ausgebildeten Elektroden-Separator-Verbunds 104 tritt die Längsrand 115a des Anodenstromkollektors aus. Dieser ist beispielsweise über eine Multi-Pin-Verbindung unmittelbar an die Unterseite der Metallscheibe 111 geschweißt.

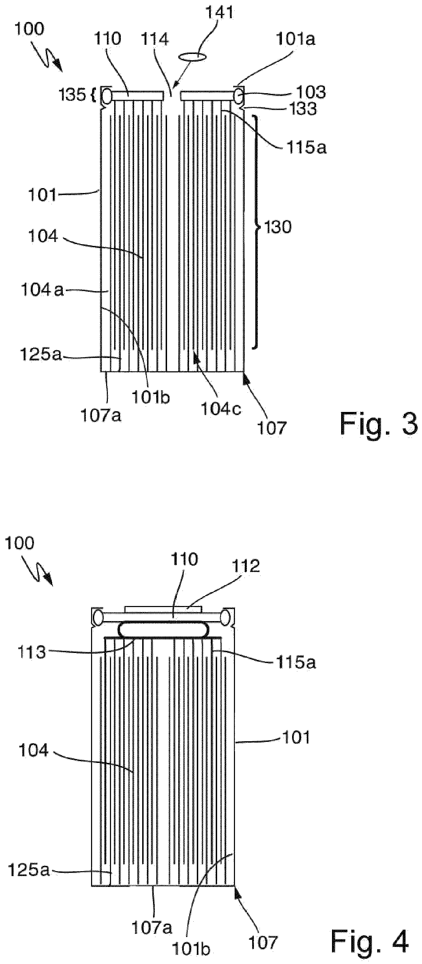

Die in **Fig. 3** dargestellte Energiespeicherzelle 100 ist ein Beispiel für die oben beschriebene Gehäusevariante mit Gehäusebecher. Das auch hier hohlzylindrisch ausgebildete Gehäuseteil 101 ist Bestandteil des Gehäusebechers 107, der einen kreisförmigen Boden 107a umfasst. Der Gehäusebecher 107 schließt gemeinsam mit dem Kontaktelement 110, bei dem es sich um eine flache Metallscheibe mit einem zentralen Loch 114 handelt, einen Innenraum ein, in dem der als Wickel ausgebildete Elektroden-Separator-Verbund 104 axial ausgerichtet ist. Das Loch 114 wird nach dem Einfüllen eines Elektrolyten ins Gehäuse mittels der Blechscheibe 141 verschlossen. Es könnte selbstverständlich auch in den Boden 107a des Gehäuses eingebracht sein. Das Gehäuseteil 101 und damit der Gehäusebecher 101 sind durch die Dichtung 103 elektrisch von dem Kontaktelement 110 getrennt. Der Rand 101a des Gehäuseteils 101 ist radial nach innen über den von der Dichtung 103 umschlossenen Rand des Kontaktelements 110 umgebogen und fixiert das Kontaktelement 110 in der kreisförmigen Öffnung des rohrförmig ausgebildeten Gehäuseteils 101. Das rohrförmig ausgebildete Gehäuseteil 101 umfasst in axialer Richtung einen Zentralabschnitt 130, in dem der Wickelmantel 104a an seiner Innenseite 101b anliegt, sowie einen Kontaktabschnitt 135, in dem die ringförmige Dichtung 103 an seiner Innenseite 101b anliegt. Die ringförmige Dichtung 103 liegt in dem Kontaktabschnitt 135 als Folge eines Pressdrucks, der von dem Rand des Kontaktelements 110 und der Innenseite 101b des rohrförmig ausgebildeten Gehäuseteils 101 auf sie ausgeübt wird, komprimiert vor.

Die beiden Abschnitte 130 und 135 werden durch die umlaufende Sicke 133 voneinander getrennt. Die Sicke 133 ist schwach ausgeprägt und ragt auf der Innenseite 101b des Gehäuseteils 101 nicht mehr als eine Gehäusewandstärke in den Innenraum hinein, genau dort, wo der Längsrand 115a des Anodenstromkollektors aus der Stirnseite 104b des Wickels heraussteht. Dieser ist unmittelbar an die Innenseite des Kontaktelements 110 geschweißt. Auf der Bodenseite tritt aus der untenliegenden Stirnseite 104c des als Wickel ausgebildeten Elektroden-Separator-Verbunds 104 der Längsrand 125a des Kathodenstromkollektors aus, welcher unmittelbar an die Innenseite des Bodens 107a geschweißt ist. Die Raumausnutzung innerhalb des Gehäuses kommt in dieser Ausführungsform dem theoretischen Optimum sehr nahe.

Die in **Fig. 4** dargestellte Energiespeicherzelle 100 ist in weiten Teilen baugleich zu der in Fig. 3 dargestellten Zelle, mit Ausnahme des Kontaktelements 110, das hier das Kontaktblech 113 umfasst, an das der Längsrand 115a des Anodenstromkollektors geschweißt ist. Darüber hinaus umfasst es den Poldeckel 112.

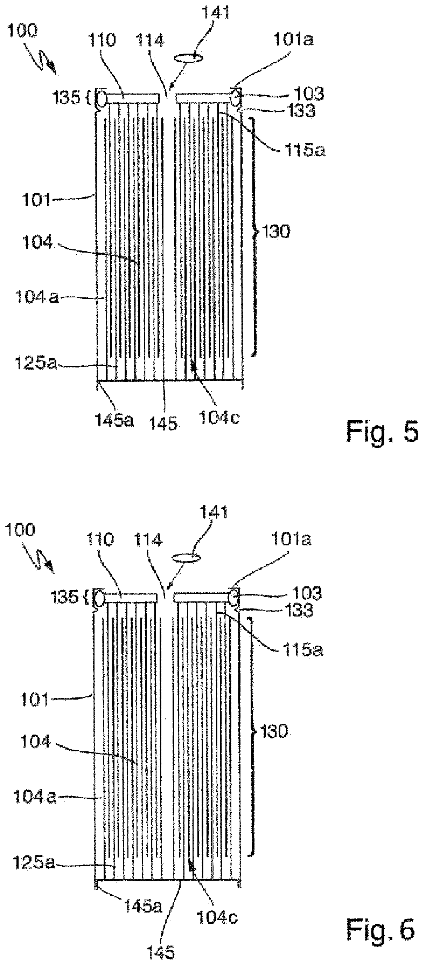

Die in **Fig. 5** dargestellte Energiespeicherzelle 100 ist gleichsam in weiten Teilen baugleich zu der in Fig. 3 dargestellten Zelle. Die Ausnahme bildet hier der bodenseitige Verschluss. An Stelle eines Bechers 107 kommt hier ein hohlzylindrisches Rohr als Gehäuseteil 101 zum Einsatz, das nicht eine, sondern zwei endständige Öffnungen aufweist. Während die obere Öffnung verschlossen ist wie im Zusammenhang mit Fig. 3 beschrieben, ist die untere Öffnung mittels des Verschlusselements 145 verschlossen. Als Verschlusselement 145 dient eine kreisförmige Metallscheibe, deren Durchmesser näherungsweise dem Innendurchmesser des hohlzylindrischen Rohrs entspricht. Der Rand 145a der Metallscheibe 145 ist mit dem rohrförmig ausgebildeten Gehäuseteil über eine umlaufende Schweißnaht (nicht dargestellt) verbunden.

Die in **Fig. 6** dargestellte Energiespeicherzelle 100 unterscheidet sich von der Zelle in Fig. 5 nur bezüglich der Form des Verschlusselements 145. Dieses weist einen um 90° umgebogenen umlaufenden Rand auf, der es ermöglicht, dass ein Randbereich des Verschlusselements flach an der Innenwand des Gehäuseteils 101 anliegt. Dies erleichtert eine Verschweißung der beiden Teile.

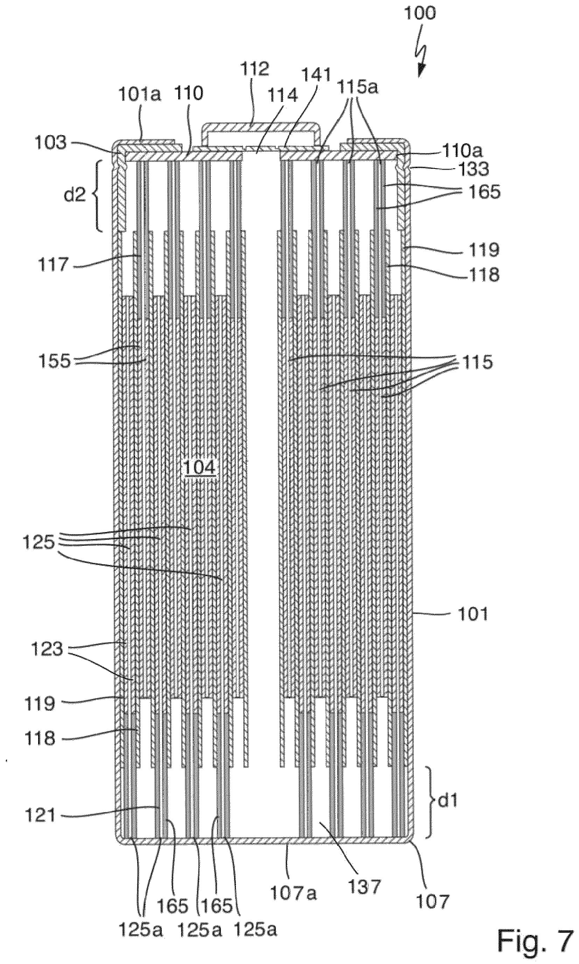

Die in **Fig. 7** dargestellte Energiespeicherzelle 100 umfasst ein hohlzylindrisch ausgebildetes Gehäuseteil 101, welches Bestandteil des Gehäusebechers 107 ist, der den kreisförmigen Boden 107a sowie eine kreisförmige Öffnung (definiert durch den Rand 101a) umfasst. Bei dem Gehäusebecher 107 handelt es sich um ein Tiefziehteil. Der Gehäusebecher 107 schließt gemeinsam mit dem Kontaktelement 110, bei dem es sich um eine flache Metallscheibe mit kreisförmigem Rand und einem zentralen Loch 114 handelt, die die kreisförmige Öffnung des Gehäusebechers 107 verschließt, einen Innenraum 137 ein, in dem der als Wickel ausgebildete Elektroden-Separator-Verbund 104 axial ausgerichtet ist. Das Loch 114 diente zum Einfüllen eines Elektrolyten ins Gehäuse und ist mittels der Blechscheibe 141 verschlossen. Auf diese ist ein Poldeckel 112 geschweißt. Die Blechscheibe 141 weicht eine oder mehrere langgestreckte Vertiefungen auf, die ihre Struktur schwächen. Sie kann daher als Überdruckventil dienen.

Der Elektroden-Separator-Verbund 104 liegt in Form eines zylindrischen Wickels mit zwei endständigen Stirnseiten vor, zwischen denen sich der umlaufende Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind.

Die zwei Stirnseiten des Elektroden-Separator-Verbunds 104 werden durch die Längsränder der Separatoren 118 und 119 gebildet. Aus diesen Stirnseiten ragen die Stromkollektoren 115 und 125 hervor. Die entsprechenden Überstände sind mit d1 und d2 bezeichnet.

Aus der oberen Stirnseite des Elektroden-Separator-Verbunds 104 tritt der Anodenstromkollektor 115 aus, aus der unteren Stirnseite der Kathodenstromkollektor 125. Der Anodenstromkollektor 115 ist in einem bandförmigen Hauptbereich mit einer Schicht aus einem negativen Elektrodenmaterial 155 beladen. Der Kathodenstromkollektor 125 ist in einem bandförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Der Rand 115a des Anodenstromkollektors 115 steht über seine gesamte Länge in unmittelbarem Kontakt mit dem Kontaktelement 110 und ist mit diesem mindestens über mehrere Abschnitte, bevorzugt über seine gesamte Länge, durch Verschweißung (insbesondere mit Hilfe eines Lasers) verbunden. Alternativ kann hier die oben beschriebene Multi-Pin-Verbindung vorliegen. Das Kontaktelement 112 dient somit gleichzeitig zur elektrischen Kontaktierung der Anode und als Gehäuseteil.

Der Rand 125a des Kathodenstromkollektors 125 steht über seine gesamte Länge in unmittelbarem Kontakt mit dem Boden 107a und ist mit diesem mindestens über mehrere Abschnitte, bevorzugt über seine gesamte Länge, durch Verschweißung (insbesondere mit Hilfe eines Lasers) verbunden. Alternativ kann auch hier die oben beschriebene Multi-Pin-Verbindung vorliegen. Der Boden 107a dient somit nicht nur als Teil des Gehäuses sondern auch zur elektrischen Kontaktierung der Kathode.

Die Gehäuseteile 101 und 110 sind durch die Dichtung 103 elektrisch voneinander isoliert. Der Rand 101a des Gehäuseteils 101 ist radial nach innen über den von der Dichtung 103 umschlossenen Rand 110a des Kontaktelements 110 umgebogen und fixiert das Kontaktelement 110 in der kreisförmigen Öffnung des rohrförmig ausgebildeten Gehäuseteils 101. Das rohrförmig ausgebildete Gehäuseteil 101 umfasst in axialer Richtung einen Abschnitt, in dem der umlaufende Wickelmantel 104a an seiner Innenseite anliegt, sowie einen Kontaktabschnitt, in dem die ringförmige Dichtung 103 an seiner Innenseite anliegt. Die ringförmige Dichtung 103 liegt in dem Kontaktabschnitt als Folge eines Pressdrucks, der von dem Rand 110a des Kontaktelements 110 und der Innenseite des rohrförmig ausgebildeten Gehäuseteils 101 auf sie ausgeübt wird, komprimiert vor.

Unmittelbar unterhalb des Kontaktabschnitts weist das Gehäuseteil 101 die umlaufende Sicke 133 auf. Die Sicke 133 ist schwach ausgeprägt und ragt auf der Innenseite des Gehäuseteils 101 weniger als eine Gehäusewandstärke in den Innenraum hinein.

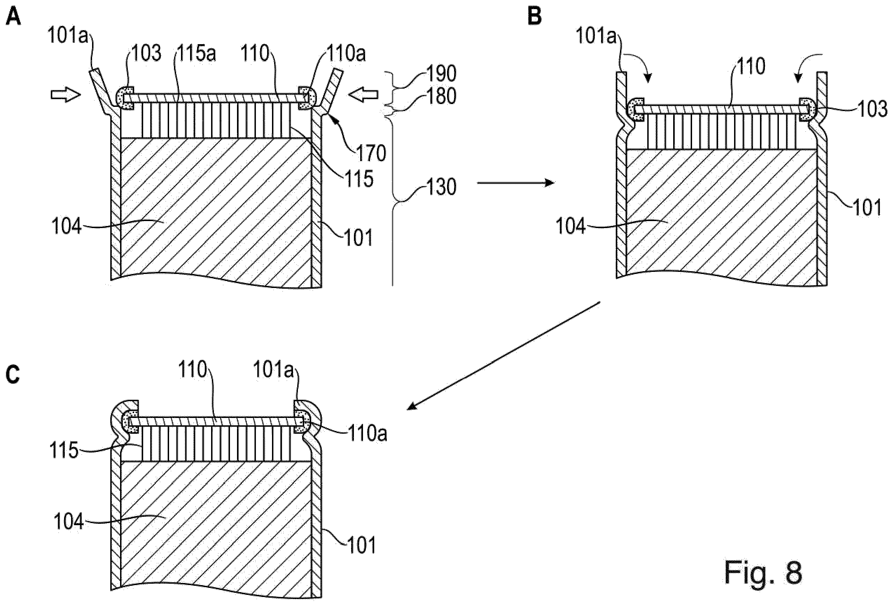

Zum Verschließen der endständigen kreisförmigen Öffnung des Gehäusebechers 107 mit dem Kontaktelement kann gemäß **Fig. 8** vorgegangen werden. Das Verschließen erfolgt in mehreren Schritten. Im Einzelnen:
A In das hohlzylindrisch ausgebildete Gehäuseteil 101 wurde der als Wickel ausgebildete Elektroden-Separator-Verbund 104 eingeschoben, aus dessen Stirnseite der Anodenstromkollektor 115 austritt. Der Rand 115a des Anodenstromkollektors 115 steht über seine gesamte Länge in unmittelbarem Kontakt mit dem als Scheibe ausgebildeten Kontaktelement 110 und ist mit diesem mindestens über mehrere Abschnitte, bevorzugt über seine gesamte Länge, durch Verschweißung (insbesondere mit Hilfe eines Lasers) verbunden. Die Herstellung dieser Schweißverbindung erfolgte vor dem Einschieben des Elektroden-Separator-Verbunds 104. Auf den Rand 110a des Kontaktelements 110 ist die ringförmige Dichtung 103 aufgezogen.
   Das rohrförmig ausgebildete Gehäuseteil 101 umfasst in axialer Richtung einen im Wesentlichen zylindrischen Zentralabschnitt 130, einen endständigen Abschnitt 190, der sich bis zu einem kreisförmigen Öffnungsrand erstreckt, und einen dazwischen liegenden Übergangsbereich 180. Der Übergangsbereich 180 zwischen dem zylindrischen Zentralabschnitt 130 und dem endständigen Abschnitt 190 besteht in einer als Stufe ausgebildeten Erweiterung 170 des Innendurchmessers des rohrförmig ausgebildeten Gehäuseteils 101. Der endständige Abschnitt 190 weist ausgehend von der als Stufe ausgebildeten Erweiterung 170 in Richtung des kreisförmigen Öffnungsrands 101a einen ansteigenden Innendurchmesserauf.
   Das Kontaktelement 110 mit der auf seinen Rand 110a aufgebrachten ringförmigen Dichtung 103 weist einen Außendurchmesser auf, der kleiner ist als ein Innendurchmesser des rohrförmigen Gehäuseteils 101 in dem endständigen Abschnitt 190 und größer, als der Innendurchmesserdes rohrförmigen Gehäuseteils 101 in dem zylindrischen Zentralabschnitt 130. Der Elektroden-Separator-Verbund 104 wird so weit in das rohrförmig ausgebildete Gehäuseteil 101 eingeschoben, dass das Kontaktelement 110 auf der als Stufe ausgebildeten Erweiterung 170 aufsitzt.
B Nach dem Einschieben des Elektroden-Separator-Verbunds 104 wird der Außendurchmesser des endständigen Abschnitts 190 an den Außendurchmesser des zylindrischen Zentralabschnitts 130 angeglichen, wobei der Übergangsbereich 180 radial eingedrückt und die Dichtung 103 komprimiert werden. Hierbei wird die abgebildete Sicke 133 gebildet.
C Nach der Angleichung des Außendurchmessers des endständigen Abschnitts 190 wird der Öffnungsrand 101a des endständigen Abschnitts 190 radial nach innen über den von der Dichtung 103 umschlossenen Rand 110a des Kontaktelements 110 umgebogen.

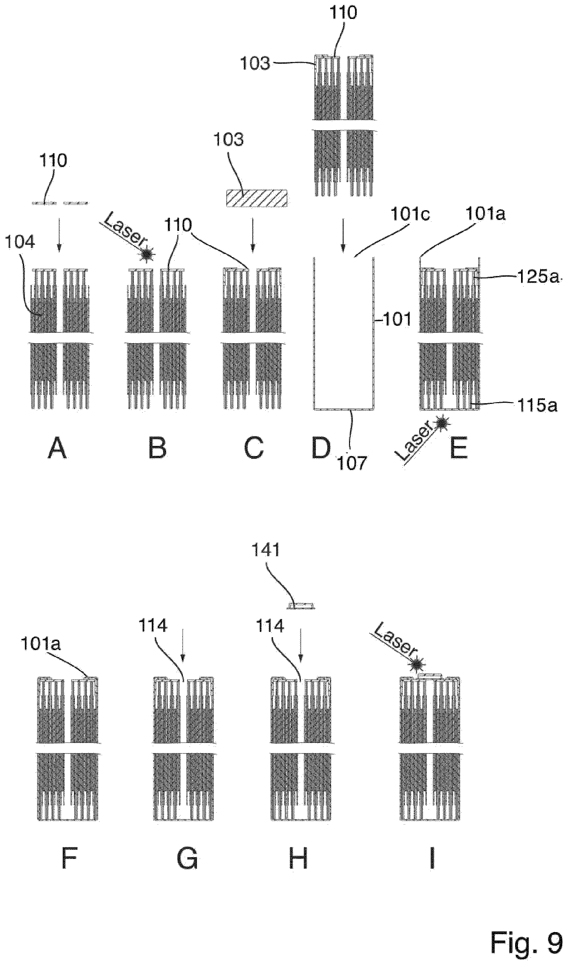

Zur Herstellung einer erfindungsgemäße Energiespeicherzelle kann gemäß **Fig. 9** vorgegangen werden, die einzelnen Verfahrensschritte A bis I sind im Folgenden beschrieben. Zunächst wird der Elektroden-Separator-Verbund 104 bereitgestellt, auf dessen obere Stirnseite eine als Kontaktplatte 110 dienende Metallscheibe 102 aufgelegt wird. Diese wird im Schritt B mit dem Längsrand 125a des Kathodenstromkollektors verschweißt. Im Schritt C wird die umlaufende Dichtung 103 auf den Rand der Kontaktplatte 110 aufgezogen. Mit dieser wird im Schritt D der Elektroden-Separator-Verbund 104 in einen Gehäusebecher 107 (der als Tiefziehteil hergestellt und einstückig ausgebildet ist und neben einem kreisförmigen Boden ein hohlzylindrisch ausgebildetes Gehäuseteil 101 sowie die endständige kreisförmige Öffnung 101c, die von dem Rand 101a definiert wird, umfasst) soweit eingeschoben, bis der Längsrand 115a des Anodenstromkollektors in unmittelbarem Kontakt mit dem Boden des Gehäusebechers 107 steht. Im Schritt E wird dieser mit dem Boden des Gehäusebechers 107 verschweißt. Im Schritt F wird der der Öffnungsrand 101a radial nach innen umgebogen. Im Schritt G erfolgt eine Befüllung des Gehäuses mit Elektrolyt, der durch die Öffnung 114 in das Gehäuse eindosiert wird. Die Öffnung 114 wird in den Schritten H und I mittels des Metallblechteils 141, das auf das Gehäuseteil 110 aufgeschweißt wird, verschlossen.

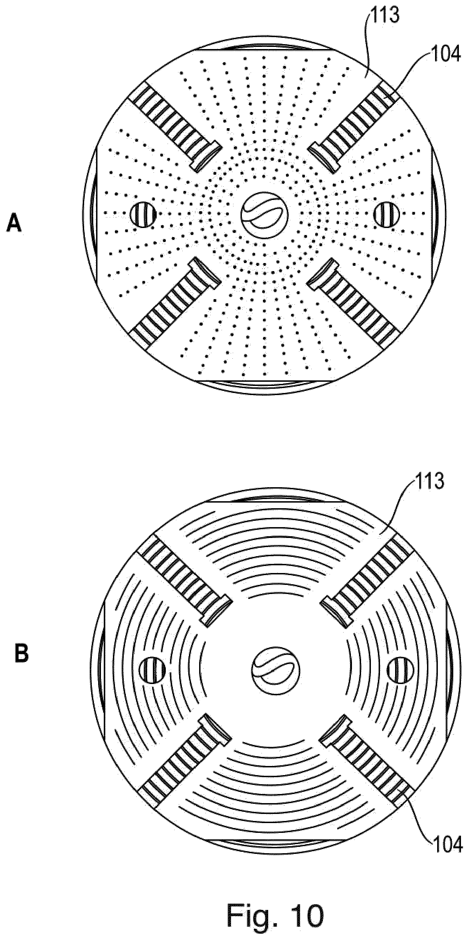

Die in **Fig. 10** dargestellten Ausführungsbeispiele illustrieren Kontaktierungsvarianten zur Anbindung der Längsränder von Stromkollektoren mit spiralförmiger Struktur an ein Kontaktblech. Im Einzelnen:
A Hier ist liegt ein Längsrand eines Stromkollektors unmittelbar an einem Kontaktblech an und ist über eine Vielzahl von punktförmigen Schweißverbindungen mit dem Kontaktblech verbunden (sogenannte Multi-Pin-Verbindung).
B Hier ist ein Längsrand eines unmittelbar an einem Kontaktblech anliegenden Stromkollektors über eine Mehrzahl von Abschnitten, die jeweils über ihre gesamte Länge über eine Schweißnaht durchgehend mit dem Kontaktblech verbunden sind, an das Kontaktblech fixiert.

## Patentansprüche

1. Energiespeicherzelle (100) mit den Merkmalen
a. die Zelle umfasst einen Elektroden-Separator-Verbund (104) mit der Sequenz Anode / Separator / Kathode,
b. der Elektroden-Separator-Verbund (104) liegt in Form eines zylindrischen Wickels mit zwei endständigen Stirnseiten (104b, 104c) und einem dazwischen liegenden Wickelmantel (104a) vor,
c. die Zelle umfasst ein Gehäuse, das ein metallisches, rohrförmig ausgebildetes Gehäuseteil (101) mit einer endständigen kreisförmigen Öffnung (101c) umfasst,
d. in dem Gehäuse ist der als Wickel ausgebildete Elektroden-Separator-Verbund (104) axial ausgerichtet, so dass der Wickelmantel (104a) an der Innenseite (101b) des rohrförmig ausgebildeten Gehäuseteils (101) anliegt,
e. die Anode ist bandförmig ausgebildet und umfasst einen bandförmigen Anodenstromkollektor (115) mit einem ersten Längsrand (115a) und einem zweiten Längsrand und zwei Endstücken,
f. der Anodenstromkollektor (115) umfasst einen bandförmigen Hauptbereich, der mit einer Schicht aus negativem Elektrodenmaterial (155) beladen ist, sowie einen freien Randstreifen (117), der sich entlang des ersten Längsrands (115a) erstreckt und der nicht mit dem Elektrodenmaterial (155) beladen ist,
g. die Kathode ist bandförmig ausgebildet und umfasst einen bandförmigen Kathodenstromkollektor (125) mit einem ersten Längsrand (125a) und einem zweiten Längsrand und zwei Endstücken,
h. der Kathodenstromkollektor (125) umfasst einen bandförmigen Hauptbereich, der mit einer Schicht aus positivem Elektrodenmaterial (123) beladen ist, sowie einen freien Randstreifen (121), der sich entlang des ersten Längsrands (125a) erstreckt und der nicht mit dem Elektrodenmaterial (123) beladen ist,
i. die Anode und die Kathode sind innerhalb des Elektroden-Separator-Verbunds (104) derart angeordnet, dass der erste Längsrand (115a) des Anodenstromkollektors (115) aus einer der endständigen Stirnseiten (104b, 104c) und der erste Längsrand (125a) des Kathodenstromkollektors (125) aus der anderen der endständigen Stirnseiten (104b, 104c) austritt,
j. die Zelle umfasst ein zumindest teilweise metallisch ausgebildetes Kontaktelement (110), das in unmittelbarem Kontakt mit einem der ersten Längsränder (115a, 125a) steht und das mit diesem Längsrand bevorzugt durch Verschweißung verbunden ist, sowie den zusätzlichen kennzeichnenden Merkmalen
k. das Kontaktelement (110) umfasst einen kreisförmigen Rand (110a),
l. die Zelle umfasst eine ringförmige Dichtung (103) aus einem elektrisch isolierenden Material, die den kreisförmigen Rand (110a) des Kontaktelements (110) umschließt und
m. das Kontaktelement (110) mit der Dichtung (103) verschließt die endständige kreisförmige Öffnung (101c) des rohrförmig ausgebildeten Gehäuseteils (101).

2. Zelle nach Anspruch 1 mit mindestens einem der folgenden zusätzlichen Merkmale:
a. Das Kontaktelement (110) ist oder umfasst eine Metallscheibe, deren Rand dem kreisförmigen Rand (110a) des Kontaktelements (110) entspricht oder diesen mitbildet.
b. Das Kontaktelement (110) ist derart in dem rohrförmig ausgebildeten Gehäuseteil (101) angeordnet, dass die ringförmige Dichtung (103) entlang einer umlaufenden Kontaktzone an der Innenseite (101b) des rohrförmig ausgebildeten Gehäuseteils (101) anliegt.
c. Die ringförmige Dichtung (103) liegt in der Kontaktzone als Folge eines Pressdrucks, der von dem Rand (110a) des Kontaktelements (110) und der Innenseite (101b) des rohrförmig ausgebildeten Gehäuseteils (101) auf sie ausgeübt wird, komprimiert vor.
d. Der eine der ersten Längsränder liegt unmittelbar an dem Kontaktelement (110), insbesondere an der Metallscheibe, an und ist bevorzugt mit dem Kontaktelement (110), insbesondere mit dieser Metallscheibe, durch Verschweißung verbunden.

3. Zelle nach Anspruch 1 mit mindestens einem der folgenden zusätzlichen Merkmale:
a. Das Kontaktelement (110) umfasst eine Metallscheibe (111), deren Rand (111a) dem kreisförmigen Rand (110a) des Kontaktelements (110) entspricht oder diesen mitbildet.
b. Das Kontaktelement (110), insbesondere die Metallscheibe (111), ist derart in dem rohrförmig ausgebildeten Gehäuseteil (101) angeordnet, dass die ringförmige Dichtung (103) entlang einer umlaufenden Kontaktzone an der Innenseite (101b) des rohrförmig ausgebildeten Gehäuseteils (110) anliegt.
c. Die ringförmige Dichtung (103) liegt in der Kontaktzone als Folge eines Pressdrucks, der von dem Rand (110a) des Kontaktelements (110), insbesondere dem Rand (111a) der Metallscheibe (111), und der Innenseite (101b) des rohrförmig ausgebildeten Gehäuseteils (101) auf sie ausgeübt wird, komprimiert vor.
d. Das Kontaktelement (110) umfasst ein metallisches Kontaktblech (113) mit zwei Seiten, von denen eine in Richtung der Metallscheibe (111) weist und bevorzugt durch Verschweißung mit der Metallscheibe (111) verbunden ist.
e. Der eine der ersten Längsränder (115a, 125a) liegt unmittelbar an der anderen Seite des Kontaktblechs (113) an und ist mit dieser bevorzugt durch Verschweißung verbunden.

4. Zelle nach einem der Ansprüche 2 oder 3, mit mindestens einem derfolgenden zusätzlichen Merkmale:
a. Das rohrförmig ausgebildete Gehäuseteil (101) umfasst in axialer Richtung einen Zentralabschnitt (130), in dem der Wickelmantel (104a) an seiner Innenseite (101b) anliegt, sowie einen Kontaktabschnitt (135), in dem die ringförmige Dichtung (103) an seiner Innenseite (101b) anliegt, wobei
- Das rohrförmig ausgebildete Gehäuseteil (101) in und zwischen den beiden Abschnitten (130, 135) einen im Wesentlichen konstanten Innendurchmesser aufweist und/oder
- der Zentralabschnitt (130) von dem Kontaktabschnitt (135) durch eine Vertiefung (133), welche die Außenseite des rohrförmig ausgebildeten Gehäuseteils (101) kreisförmig umläuft, getrennt wird.
b. Im Bereich der umlaufenden Vertiefung (133) ist der Außendurchmesser des rohrförmig ausgebildeten Gehäuseteils (101) um maximal das 2- bis 6-fache der Wandstärke des Gehäuses in diesem Bereich reduziert.

5. Zelle nach Anspruch 4, mit mindestens einem der folgenden zusätzlichen Merkmale:
a. Das rohrförmig ausgebildete Gehäuseteil (101) umfasst einen kreisförmigen Rand (101a), der radial nach innen über den von der Dichtung (103) umschlossenen Rand (110a) des Kontaktelements (110) umgebogen ist und der das Kontaktelement (110) in der kreisförmigen Öffnung (101c) des rohrförmig ausgebildeten Gehäuseteils (101) fixiert.
b. Der Kontaktabschnitt (135) erstreckt sich in axialer Richtung von der Vertiefung (133) bis zu dem radial nach innen umgebogenen Rand (101a).

6. Zelle nach einem der vorhergehenden Ansprüche, mit mindestens einem der folgenden zusätzlichen Merkmale:
a. Das rohrförmig ausgebildete Gehäuseteil (101) ist Bestandteil eines Gehäusebechers (107), der einen kreisförmigen Boden (107a) umfasst.
b. Der andere der ersten Längsränder (115a, 125a) liegt unmittelbar an dem Boden (107a) an und ist mit dem Boden (107a) bevorzugt durch Verschweißung verbunden.

7. Zelle nach einem der Ansprüche 1 bis 5, mit mindestens einem der folgenden zusätzlichen Merkmale:
a. Das rohrförmig ausgebildete Gehäuseteil (101) weist eine weitere endständige kreisförmige Öffnung auf.
b. Die Zelle (100) umfasst ein Verschlusselement (145) mit einem kreisförmigen Rand (145a), das diese weitere endständige Öffnung verschließt.
c. Das Verschlusselement (145) für die weitere endständige Öffnung ist oder umfasst eine Metallscheibe, deren Rand dem kreisförmigen Rand (145a) des metallischen Verschlusselements (145) entspricht oder diesen mitbildet.

8. Zelle nach Anspruch 7, mit mindestens einem der folgenden zusätzlichen Merkmale:
a. Die Metallscheibe ist derart in dem rohrförmig ausgebildeten Gehäuseteil angeordnet, dass ihr Rand entlang einer umlaufenden Kontaktzone an der Innenseite (101b) des rohrförmig ausgebildeten Gehäuseteils (101) anliegt.
b. Der Rand der Metallscheibe ist mit dem rohrförmig ausgebildeten Gehäuseteil (101) über eine umlaufende Schweißnaht verbunden.
c. Das rohrförmig ausgebildete Gehäuseteil (101) umfasst einen kreisförmigen Rand (101a), der radial nach innen über den Rand (145a) des Verschlusselements (145), insbesondere den Rand der Metallscheibe, umgebogen ist.

9. Zelle nach einem der Ansprüche 7 oder 8, mit einem der folgenden zusätzlichen Merkmale:
a. Der andere der ersten Längsränder (115a, 125a) liegt unmittelbar an der Metallscheibe an und ist mit der Metallscheibe bevorzugt durch Verschweißung verbunden.
b. Der andere der ersten Längsränder ist an ein Kontaktblech (113) geschweißt, das unmittelbar an der Metallscheibe anliegt.

10. Zelle nach Anspruch 7, mit mindestens einem der folgenden zusätzlichen Merkmale:
a. Die Zelle umfasst eine ringförmige Dichtung (103) aus einem elektrisch isolierenden Material, die den kreisförmigen Rand des Verschlusselements, insbesondere den Rand der Metallscheibe, umschließt.
b. Die Metallscheibe ist derart in dem rohrförmig ausgebildeten Gehäuseteil angeordnet, dass die ringförmige Dichtung entlang einer umlaufenden Kontaktzone an der Innenseite des rohrförmig ausgebildeten Gehäuseteils anliegt.
c. Die ringförmige Dichtung liegt in der Kontaktzone als Folge eines Pressdrucks, der von dem Rand der Metallscheibe und der Innenseite des rohrförmig ausgebildeten Gehäuseteils auf sie ausgeübt wird, komprimiert vor.
d. Das rohrförmig ausgebildete Gehäuseteil umfasst einen kreisförmigen Rand, der radial nach innen über den von der Dichtung umschlossenen Rand des Verschlusselements umgebogen ist und der das metallische Verschlusselement in der weiteren endständigen Öffnung des rohrförmigen Gehäusesegments fixiert.

11. Zelle nach Anspruch 10, mit einem der folgenden zusätzlichen Merkmale:
a. Der andere der ersten Längsränder liegt unmittelbar an der Metallscheibe an und ist mit der Metallscheibe durch Verschweißung verbunden.
b. Der andere der ersten Längsränder ist an ein Kontaktblech geschweißt, das unmittelbar an der Metallscheibe anliegt.

12. Verfahren zur Herstellung einer Energiespeicherzelle (100) nach einem der vorhergehenden Ansprüche, umfassend die Schritte
a. Bereitstellung eines Elektroden-Separator-Verbunds (104) mit der Sequenz Anode / Separator / Kathode, der in Form eines zylindrischen Wickels mit zwei endständigen Stirnseiten (104b, 104c) und einem dazwischen liegenden Wickelmantel (104a) vorliegt, wobei die Elektroden jeweils einen mit einem Elektrodenmaterial beschichteten Stromkollektor (115, 125) mit einem ersten Längsrand (115a, 125a) und einem zweiten Längsrand und zwei Endstücken aufweisen und einer der Längsränder (115a, 125a) aus einer der endständigen Stirnseiten (104b, 104c) austritt,
b. Bereitstellung eines rohrförmig ausgebildeten Gehäuseteils (101), das eine endständige kreisförmige Öffnung (101c) aufweist,
c. Bereitstellung eines zumindest teilweise metallisch ausgebildeten Kontaktelements (110), das einen kreisförmigen Rand (110a) aufweist,
d. Aufbringen einer ringförmigen Dichtung (103) auf den kreisförmigen Rand (110a) des Kontaktelements (110).
e. Verschweißen des aus der Stirnseite austretenden Längsrands mit dem Kontaktelement (110) oder einer metallischen Komponente des Kontaktelements (110),
f. Einschieben des Elektroden-Separator-Verbunds (104) durch die kreisförmige Öffnung (101c) in das rohrförmig ausgebildete Gehäuseteil (101), so dass der Wickelmantel (104a) an der Innenseite (101b) des rohrförmig ausgebildeten Gehäuseteils (101) anliegt und die auf den Rand (110a) aufgebrachte ringförmige Dichtung (103) entlang einer umlaufenden Kontaktzone an der Innenseite (101b) des rohrförmig ausgebildeten Gehäuseteils (101) anliegt, und
g. Ausüben eines radial gerichteten Drucks auf das rohrförmig ausgebildete Gehäuseteil (101), so dass dessen Innenseite (101b) gegen den Rand (110a) des Kontaktelements (110) gepresst und die dazwischen angeordnete ringförmige Dichtung (103) einem Pressdruck ausgesetzt und komprimiert wird.

13. Verfahren nach Anspruch 12, **gekennzeichnet durch** mindestens eines der folgenden zusätzlichen Merkmale und Schritte:
a. Das rohrförmig ausgebildete Gehäuseteil (101) umfasst in axialer Richtung einen im Wesentlichen zylindrischen Zentralabschnitt (130), einen endständigen Abschnitt (190), der sich bis zu einem kreisförmigen Öffnungsrand (101a) erstreckt, und einen dazwischen liegenden Übergangsbereich (180).
b. Der Übergangsbereich (180) zwischen dem zylindrischen Zentralabschnitt (130) und dem endständigen Abschnitt (190) besteht in einer als Stufe (170) ausgebildeten Erweiterungdes Innendurchmessers des rohrförmig ausgebildeten Gehäuseteils (101).
c. Der endständige Abschnitt (190) weist ausgehend von der als Stufe (170) ausgebildeten Erweiterung in Richtung des kreisförmigen Öffnungsrands (110a) einen ansteigenden Innendurchmesser auf.
d. Das Kontaktelement (110) mit der auf seinen Rand (110a) aufgebrachten ringförmigen Dichtung (130) weist einen Außendurchmesser auf, der kleiner ist als ein Innendurchmesser des rohrförmigen Gehäuseteils (101) in dem endständigen Abschnitt (190) und größer, als der Innendurchmesser des rohrförmigen Gehäuseteils (101) in dem zylindrischen Zentralabschnitt (130).
e. Der Elektroden-Separator-Verbund (104) wird so weit in das rohrförmig ausgebildete Gehäuseteil (101) eingeschoben, dass das Kontaktelement (110) auf der als Stufe (170) ausgebildeten Erweiterung aufsitzt.

14. Verfahren nach Anspruch 13, **gekennzeichnet durch** mindestens eines der folgenden zusätzlichen Merkmale und Schritte:
a. Nach dem Einschieben des Elektroden-Separator-Verbunds (104) wird der Außendurchmesser des endständigen Abschnitts (190) an den Außendurchmesser des zylindrischen Zentralabschnitts (130) angeglichen, wobei der Übergangsbereich (180) radial eingedrückt und die Dichtung (103) komprimiert wird.
b. Nach der Angleichung des Außendurchmessers des endständigen Abschnitts (190) wird der Öffnungsrand (101a) des endständigen Abschnitts (190) radial nach innen über den von der Dichtung (103) umschlossenen Rand (110a) des Kontaktelements (110) umgebogen.

15. Verfahren nach einem der Ansprüche 12 bis 14, **gekennzeichnet durch** mindestens einen der folgenden zusätzlichen Schritte:
a. Der Elektroden-Separator-Verbund (104) wird mit einem Elektrolyten getränkt, wobei der Elektrolyt durch eine dafür vorgesehene Durchbrechung (114) in dem Kontaktelement (110) oder einem anderen Gehäuseteil eingefüllt wird.
b. Nach dem Einfüllen des Elektrolyten getränkt wird die Durchbrechung (114) verschlossen, beispielsweise durch Verklebung oderVerschweißung.
c. Der Verschluss erfolgt unter Verwendung einer Überdrucksicherung (120).
